(19) Europäisches Patentamt / European Patent Office / Office européen des brevets

(11) **EP 3 855 393 B1**

(12) **EUROPEAN PATENT SPECIFICATION**

(45) Date of publication and mention
of the grant of the patent:
**20.07.2022 Bulletin 2022/29**

(21) Application number: **21152677.7**

(22) Date of filing: **21.01.2021**

(51) International Patent Classification (IPC):
**G06T 7/215** (2017.01)     **G06T 7/11** (2017.01)
**H04N 19/543** (2014.01)

(52) Cooperative Patent Classification (CPC):
**G06T 7/215; G06T 7/11;** G06T 2207/10016;
G06T 2207/30252

(54) **A METHOD FOR DETECTING MOVING OBJECTS**

VERFAHREN ZUR ERKENNUNG BEWEGTER OBJEKTE

PROCÉDÉ DE DÉTECTION D'OBJETS EN MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2020 DE 102020101444**

(43) Date of publication of application:
**28.07.2021 Bulletin 2021/30**

(73) Proprietor: **Connaught Electronics Ltd.
Tuam, County Galway (IE)**

(72) Inventors:
• **MARIOTTI, Letizia**
**Tuam, County Galway, - (IE)**
• **HUGHES, Ciaran**
**Tuam, County Galway, - (IE)**
• **CHANDRA, Sunil**
**Tuam, County Galway, - (IE)**

(74) Representative: **Jauregui Urbahn, Kristian
Valeo Schalter und Sensoren GmbH
CDA-IP
Laiernstraße 12
74321 Bietigheim-Bissingen (DE)**

(56) References cited:
**US-A1- 2019 164 296**

• **MARIOTTI LETIZIA ET AL: "Spherical formulation of moving object geometric constraints for monocular fisheye cameras", 2019 IEEE INTELLIGENT TRANSPORTATION SYSTEMS CONFERENCE (ITSC), IEEE, 27 October 2019 (2019-10-27), pages 816-823, XP033668878, DOI: 10.1109/ITSC.2019.8917512 [retrieved on 2019-11-27]**
• **ZHOU DINGFU ET AL: "Moving object detection and segmentation in urban environments from a moving platform", IMAGE AND VISION COMPUTING, vol. 68, 1 December 2017 (2017-12-01), pages 76-87, XP055808763, GUILDFORD, GB ISSN: 0262-8856, DOI: 10.1016/j.imavis.2017.07.006**

## Description

### Field

The present application relates to a method for detecting moving objects. More specifically, it relates to a method to identify moving objects in images taken at different times from a camera.

### Background

When two images of an environment are acquired at two different times, the difference between the images may reveal a moving object in the environment. The differences between the images can be calculated using known techniques such as dense optical flow (DOF). DOF produces an output indicating the differences in the location of pixel regions between the images. From this output, the motion of objects in the images may be assessed. For images taken from the same camera pose, this assessment is straightforward because differences between the images will be due to moving objects. When the camera pose changes between images, the analysis is more complex. However, methods to perform this complex analysis are known, such as described in the article "Spherical formulation of moving object geometric constraints for monocular fisheye cameras" published by L. Mariotti and C. Hughes for the 2019 IEEE Intelligent Transportation Systems Conference.

The outcome of this complex analysis is an image of the likelihood of motion. From this image, the regions in a camera image likely to correspond to moving objects can be identified. One way this identification may be performed is described in "coherent motion segmentation in moving camera videos using optical flow orientations" by M. Narayana et al, in page 1577 of the Proceedings of the IEEE International Conference on Computer Vision, 2013, 1577.

"Unsupervised flow-based motion analysis for an autonomous moving system" by A. M. Pinto et al. in Image and Vision Computing 2014, 32(6-7), 391, relates to a machine learning approach to motion analysis of DOF images for robotic systems with real-time constraints, and focuses on a surveillance scenario where a mobile robot uses a monocular camera.

"Visual motion perception for mobile robots through dense optical flow fields" by A. M. Pinto et al. in Robotics and Autonomous Systems 2017, 87, 1, relates to a machine learning approach to distinguish regions with distinct motion models. It extracts the moving objects by retrieving and describing motion properties of a flow field and using these properties to guide segmentation.

"A motion descriptor based on statistics of optical flow orientations for action classification in video-surveillance" by F. Martinez et al, In Multimedia and Signal Processing 2012, 267, describes using a motion descriptor to classify human activity classification in video-surveillance applications.

In US2019/0164296 is described a method to determine, in a loop, a plurality of motion vectors for an image.

It is an object of the present invention to detect motion in images without the limitations of this related work.

### Summary

The present invention is defined by the independent claim.

Embodiments of the present invention provide a method to accurately identify regions in camera images that correspond to moving objects. The method enables data from a single wide field of view (FOV) camera mounted on a moving vehicle to detect object motion in the environment surrounding the vehicle.

The dependent claims provide further optional features.

### Brief Description of the Drawings

Embodiments of the invention will now be described, by way of example, with reference to the accompanying drawings, in which:

> Figure 1 shows an example environment with a moving vehicle, a static object, and a moving object;
> Figure 2 shows a method to identify and report moving objects;
> Figure 3 shows an image demonstrating the output of a dense optical flow evaluation of two images taken from a camera mounted on a moving vehicle;
> Figure 4 shows a cell matrix overlaid on an image from a camera module on a vehicle;
> Figure 5 shows a motion likelihood calculation matrix;
> Figure 6 shows an image in which regions corresponding to moving objects are labelled, the labelling has been performed using a motion likelihood calculation;
> Figure 7 shows a filtered motion likelihood calculation matrix;
> Figure 8 shows an image in which regions corresponding to moving objects are labelled, the labelling has been performed using a filtered motion likelihood calculation;
> Figure 9A shows part of a cell matrix with the corresponding regions in the horizontal flow information;
> Figure 9B indicates the result of region growing assessments using the data shown in figure 9A; and
> Figure 10 shows the flow diagram that is followed during the region growing process.

### Description

For many tasks involving driving vehicles, acquiring information about moving objects in the local environment is important. For example, it is beneficial to alert a driver if a large object is moving nearby. One way that this can be performed is by analysing images from camera modules mounted on a vehicle.

The considered vehicle may be self-driving i.e. an autonomous vehicle or have driver assistive features. In this case, the accuracy of the acquired information is particularly important to drive the vehicle or to assist the driver of the vehicle. For example, a vehicle control mechanism may receive information about nearby moving objects and take appropriate action. As an example, a vehicle control mechanism may reduce forward motion of a vehicle if a forward-facing camera mounted on the vehicle shows multiple large moving objections whose trajectory is likely to insect or interfere with that of the vehicle.

The sensitivity of the cameras used in the invention need not be limited to any specific range of wavelengths but most commonly it will be used with cameras that are sensitive to visible light. The camera will generally be in the form of a camera module comprising a housing for a lens and a sensor, the lens serving to focus light onto the sensor. The camera module may also have electronics to power the sensor and enable communication with the sensor. The camera module may also comprise electronics to process the image. The processing can be low level image signal processing, for example, gain control, exposure control, white balance, denoise, etc. and/or it can involve more powerful processing for example, for computer vision.

Preferably the camera has a wide field of view to allow moving object detection over a wide angular range. A wide field of view is typically achieved by the camera having a wide field of view lens, such a fisheye lens. A fisheye lens is preferable as these are generally cylindrically symmetric. In some applications of the invention, the field of view may be over 180 degrees. In other applications of the invention, the field of view may be less or more than 180 degrees. Whilst a fisheye lens is preferred, any other lens that provides a wide field of view can be used. In this context, a wide field of view is a lens having a field of view over 100 degrees, preferably over 150 degrees and more preferably over 170 degrees. Typically, cameras with such a wide field of view result in imaging artefacts and distortions in acquired images.

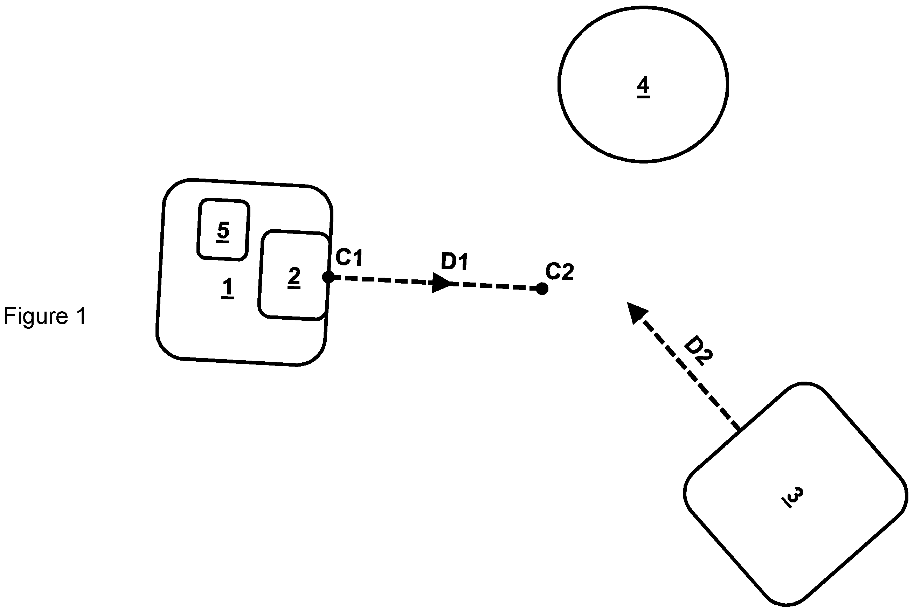

Turning to figure 1, a vehicle 1 with a camera 2 is travelling in a first direction, which is indicated by a dotted line D1. The optical axis of the camera is orientated along the first direction D1 i.e. it is a front-facing camera on the vehicle 1. Within the camera 2 field of view, FOV, are two objects. A first object 3 travelling in a second direction D2 of travel that is different to the first direction, and a second object 4 which is not moving i.e. static. At a first time, the camera 2 has a first pose C1. Due to the motion of the vehicle 2, at a later time, the camera 2 has a second camera pose C2. The difference between C2 and C1 is a first camera pose change. If the camera pose is subsequently changed there will be a second camera pose change moving the camera to a third pose.

A first image and a second image are acquired from the camera 2. The first and second image have the same size and resolution. In other embodiments, image processing can be used to ensure that acquired images of different size and/or resolution are converted to images of the same size and resolution.

If the first image is acquired from the camera 2 at the first pose C1 and the second image is acquired at the second pose C2, the position of the both objects 3, 4 will have changed relative to the camera 2. The difference of the second object 4 in the images will be entirely due to the motion of the vehicle 1. However, the difference of the first object 3 in the images is partly due to the motion D2 of the object 3 and partly due to the motion D1 of the vehicle 1.

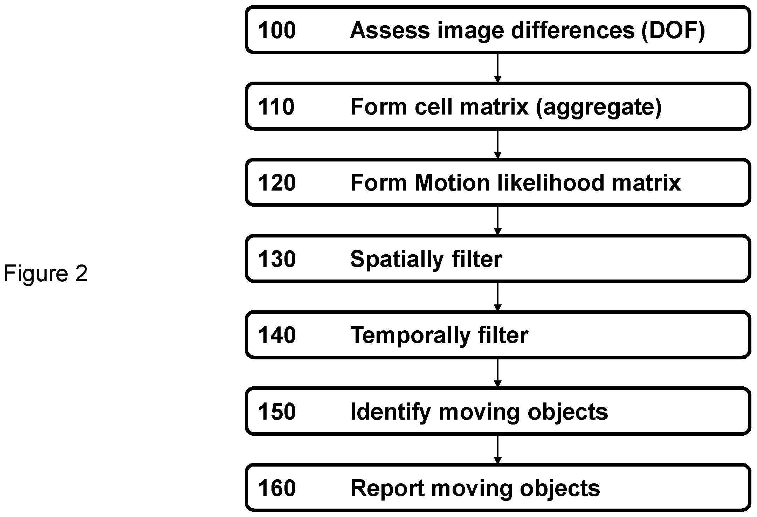

Data from sensors 5 on the vehicle 1 can be processed to ascertain the vehicle motion, from which the first camera pose change can be measured. In some embodiments, the sensors 5 will be one or more odometers that are rigidly mounted on the vehicle. However, any sensor that allows the change in camera pose to be determined can be used to work the invention. Given the first image and the second image and the sensor data, the process summarized in figure 2 can be followed to identify and report moving objects.

Turning to the first step in figure 2, the first image and the second image are processed 100 to evaluate the difference between the first image and the second image. This processing is performed using known techniques such as dense optical flow, DOF, which is described in G. Farneback's article titled "Two-frame motion estimation based on polynomial expansion" in Scandinavian conference on Image analysis, Springer, 2003, p363-370. The result of using DOF to assess the difference between the first image and the second image is a dense optical flow image, which comprises an image of vectors that define the flow information or flow map. The image is preferably the same size as the first image. The flow information comprises a series of horizontal and vertical flow vectors that indicate the difference in the position of pixels between the first image and the second image.

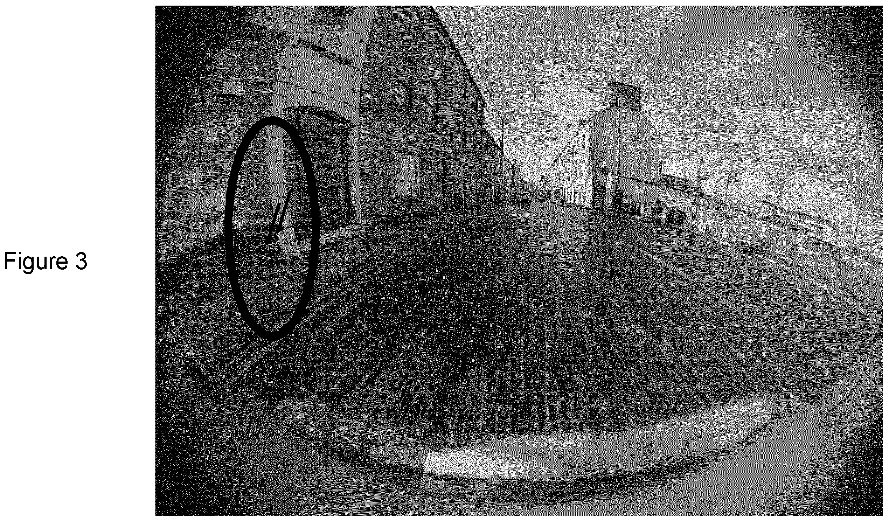

The flow information can be displayed in various ways. One way is to make an image in which a plurality of arrows overlay the first image. The direction and size/length of the arrows may then indicate the difference, or flow, between the images. An example of such an image is shown in figure 3.

DOF assessment characterizes the change in location of pixel regions from the first image in the second image. The size of the pixel regions is configurable. Solely as an example, pixel regions may be sized as a square of 9 pixels (3x3). Often considered pixel regions will have few or no unique identifying features and/or images may have repeating structures. Consequently, the resultant flow information may have a lot of noise and may comprise areas where invalid, or no, flow information has been evaluated. An example of this is shown in figure 3 in which a region has been circled with several arrows that appear to point downwards in a region of the flow information that comprises arrows that are aligned in a substantially leftward direction. These incoherent arrows, likely arising due to the repeating pattern on the wall, represent erroneous flow information due to mistakes in the DOF assessment.

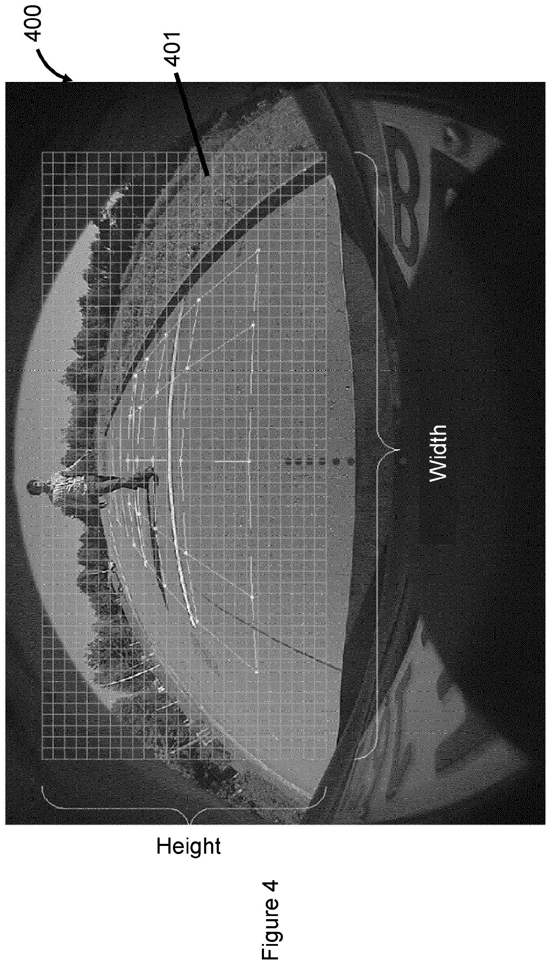

Referring to Figure 4, when assessing motion and attempting to detect moving objects, it is more important to have reliable flow information that can be processed quickly than to have single pixel precision object detection. For this reason, it is preferable to aggregate the flow information into cells. The cells are arranged in a two-dimensional array called a cell matrix 400 an example of which along with an exemplary cell 401 are shown in the Figure 4. The cell matrix 400 is a rectangular image of flow information. The cell matrix 400 is sized to minimize areas of the camera images that do not contain flow information. In other embodiments, different shapes of cell matrix can be used.

In Figure 4, the housing of the vehicle and camera, which will not change significantly between acquired images has mostly been cropped away by appropriate selection of the width and height of the cell matrix 400. The cell size is application specific but selecting cells sized as a square of 25 pixels (5x5) of the first image is typical. In this case, each cell of the cell matrix 400 will comprise an aggregated form of the flow information from a region covering 25 pixels. The cell matrix 400 is formed using the result of the DOF assessment. Thus, the shape of the cell in the cell matrix 400 can be set regardless of the shape of the pixel region size used in the DOF assessment.

Forming the cell matrix 400 is similar to binning or aggregating, the flow information. Such aggregation reduces the resolution of the DOF assessment to the cell size but greatly improves the future processing speed and results in lower noise and fewer cells having invalid flow information. The specific calculation used when aggregating can vary. Any calculation may be used if it processes the flow information to produce at least one value of flow information for a cell that is reflective of all the flow information in the region of the flow information corresponding to the cell.

Typically, the values of the horizontal and vertical flow information in each cell are calculated as the mean of the valid flow vector components in the region of the flow information corresponding to the cell. In this way, even if not all the considered flow information values are valid, it is still possible to assign a value to the cell and thereby fill small regions of invalid flow information. If the cell comprises no valid flow information (e.g. all values are zero), the cell is set to invalid. When this step 110 is complete, the cell matrix 400 is said to be formed.

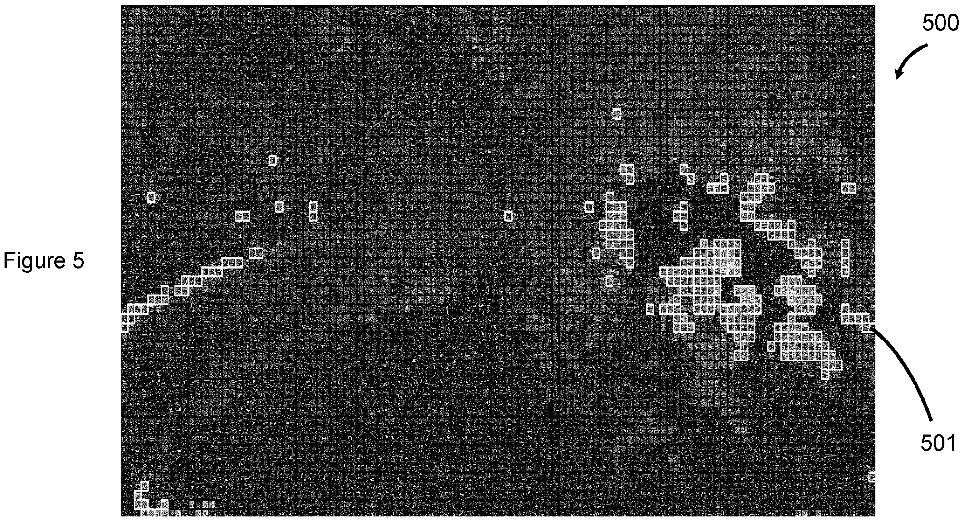

The next step 120 of Figure 2 takes sensor information that reveals the difference in camera pose between acquired images. As examples, odometry from a camera sensor or odometry information obtained from a sensor 5 mounted on the vehicle can be used. The sensor information is processed to obtain the difference in camera pose. The camera pose and the cell matrix 400 are then passed to a motion likelihood calculation module, and a motion likelihood calculation is performed 120. The output of this calculation is a motion likelihood matrix 500, such as shown in figure 5. In the embodiment, the motion likelihood matrix 500 has the same dimensions as the cell matrix. Each cell 501 of the motion likelihood matrix 500 displays calculated motion information which indicates the likelihood of motion on a scale from 0 to 1. In figure 5, the illustrated data runs from black (0) to white (1). Of course, the illustrated scale and data is only exemplary to demonstrate the method.

Preferably the motion likelihood calculation is calculated on a cellular matrix to produce a motion likelihood matrix in the manner described in the article "Spherical formulation of moving object geometric constraints for monocular fisheye cameras" published by L. Mariotti and C. Hughers for the 2019 IEEE Intelligent Transportation Systems Conference. The resultant motion likelihood matrix is a map of the motion likelihood i. e. an image of motion likelihood.

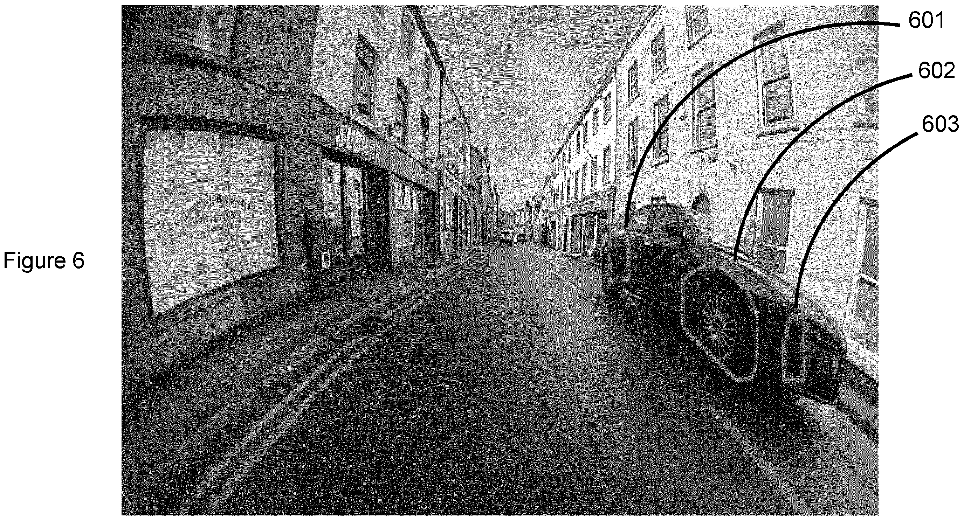

Using the motion likelihood matrix 500, regions of motion can be labelled as moving objects. However, such labelling produces noisy results with apparent errors. Figure 6 demonstrates this, by showing the result of labelling the motion likelihood matrix 500 of figure 5 to indicate regions of motion. In figure 6, three moving regions 601, 602, 603 have been labelled as regions of motion. It is however clear from figure 6, that all three moving regions correspond to parts of the same vehicle. Therefore, only one single moving region representing the vehicle should have been labelled.

Such errors are common because the flow information from the DOF assessment, and consequently the cell matrix 400 and motion likelihood matrix 500, is noisy. Noise in the flow information arises because the pixel searching that DOF assessment involves is challenging. The difficulty increases for images having: fractal parts, such as clouds; homogeneous areas without distinguishing features to match; and repeated patterns (e. g. fences, gates, bricks etc). Mismatches or failure to match are common.

When mismatches occur, the flow information produced by the DOF assessment can often be determined by visual analysis to be wrong, as the erroneous flow information often has a surprising orientation relative to the surrounding flow information (see figure 3). Erroneous flow information due to mismatching may also produce large values in the flow information and large value in the motion likelihood metric.

Mismatches are a common source of false positives in moving object detection. However, simple analysis of flow information cannot distinguish whether an area with notably different values to surrounding flow information is due to a moving object (a valid moving object) or a mistake in the DOF assessment (a false positive due to a mismatch). The present invention uses two different approaches to help address this problem: temporal filtering and spatial filtering.

Temporal filtering, or filtering over time, will be described first. Certain features e.g. clouds in the sky lead to noise in flow information. This presents as a random variation in the motion likelihood matrix 500. As it is a random variation, by comparing two motion likelihood matrices generated from successive images and using the lowest values in corresponding cells of the motion likelihood matrices, the random variation will be suppressed. A minimum operator takes values and returns the lowest. Consequently, applying a minimum operator to multiple motion likelihood matrices reduces the incidence of noise in the resultant motion likelihood matrix produced by the operation.

Considering two successive motion likelihood matrices (e.g. a current motion likelihood matrix 500 and a previous motion likelihood matrix), the minimum value between two cells at the same position will be taken. If one cell in the compared cells has no valid value, the value in the valid cell is used. If both cells have invalid data, an invalid result is recorded. Temporal filtering improves the completeness of the resultant motion likelihood matrix as it fills in regions with invalid flow in the processed motion likelihood matrices, which are frequent in the case of large and homogeneous regions in the camera images.

By applying the minimum operator to increasing numbers of motion likelihood matrices, noise can be effectively suppressed. The downside of temporal filtering is that the values of the cells representing small moving objects may also be reduced (e.g. moving objects in the far distance may be suppressed rather than labelled). However, for most vehicular applications, it is more important to accurately label a large nearby moving object than to ensure all moving objects are labelled.

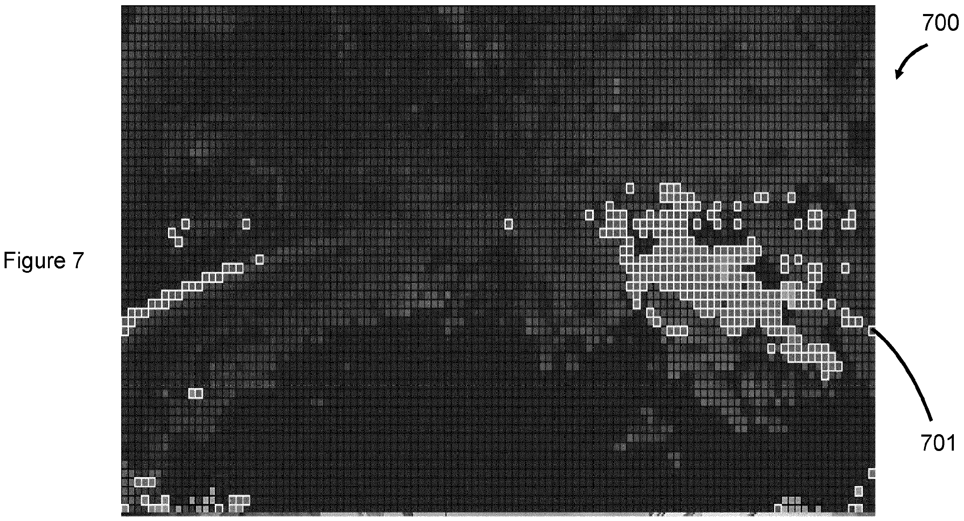

An example of a filtered motion likelihood matrix 700 produced by the temporal filtering of two consecutive motion likelihood matrices is shown in figure 7. This image has been formed from the same image data used to produce the unfiltered motion likelihood matrix 500 seen in figure 5. It is clear by comparison of figure 5 and figure 7 that the filtering has helped to reduce the noise and fill in voids in the motion likelihood matrix.

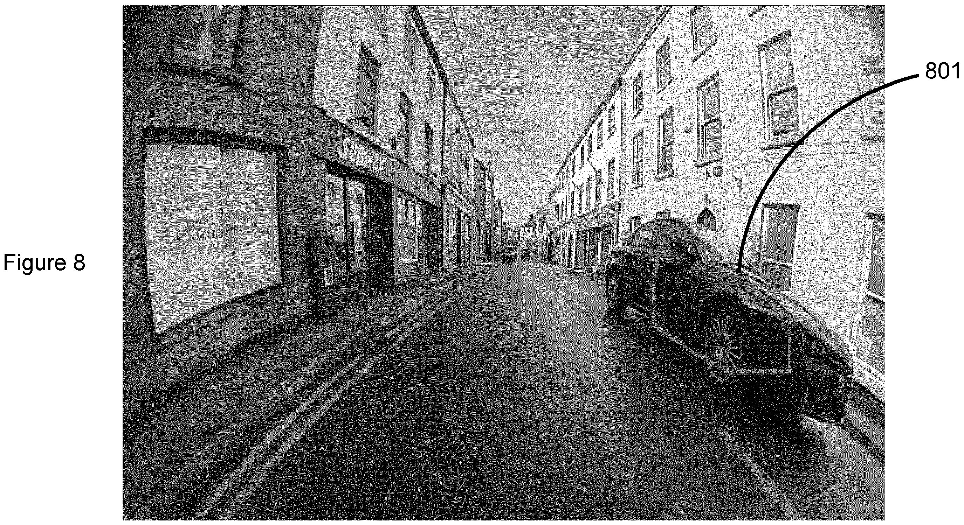

Given the knowledge that there should be only one single moving region representing a moving vehicle (see the car of the right-hand side of figure 8), it is also clear that the filtering has produced a motion calculation matrix that better represents the motion in the imaged environment

Another filtering method is the method of filtering with a spatial filter using the variance in the flow information for a given image. For each cell, the covariance matrix of the horizontal and vertical flow components in the region of the flow information corresponding to the cell is calculated. The sum of the eigenvalues of the covariance matrix is then used as a measure of dispersion. From the sum of the eigenvalues, the weight applied to each cell of the feature matrix, $W_{DOF}$, is set as:

$$ W_{DOF} = \frac{1}{1+\omega\gamma^2} , $$

where $\gamma$ is the sum of the eigenvalues, and $\omega$ is a parameter that can be tuned to weight the influence of the spatial filtering. The motion likelihood matrix 500 has, in each cell, a weight assigned ranging between 0 (high variance meaning a low reliability) and 1 (low variance meaning a high reliability). After weighing the motion likelihood matrix values, a filtered motion likelihood matrix is formed i.e. spatial filtering 130 has been applied.

Effectively, spatial filtering assumes that inconsistent local flow in flow information is likely due to error in the calculation process and not small moving objects. With this approach, the influence of random-like noise (e.g. sky) is also reduced. If the region of erroneous flow information is bigger than the cell size or if the spatial variation is "smooth", the erroneous flow information will not be filtered by the spatial filter as the variance will still be low. Whilst this means the spatial filtering is not perfect, this also ensures that most validly identified motion is not suppressed by spatial filtering.

The motion likelihood matrix after filtering is considered the final motion likelihood matrix. The final motion likelihood matrix is subsequently processed to identify regions that correspond to moving objects. This is a form of segmentation and is called labelling.

When labelling, high values in a filtered motion likelihood matrix, preferably above a threshold spatial density, may be used to determine the position and shape of moving objects. In other words, a high concentration of motion likelihood values provides an initial estimate of a region that is a moving object. Such value and spatial density thresholding provides an initial labelling.

Typically, motion likelihood calculations use the ground plane as reference in the calculation and are consequently less effective below the horizon. This means that the initial labelling may be inaccurate above the horizon. To improve the accuracy of the labelling, a region growing process is used. The growing is performed using the flow information in the cell matrix 400. Since the cell matrix 400 is the same size and shape as the motion likelihood matrix 500 the information from both images can be used together when region growing. To start, the cells with positive values in the final motion likelihood matrix mark the seed regions. In other embodiments, the seeds may be set by other known methods e.g. random assignment or estimating regions by machine learning methods.

Every seed has a region label assigned and, preferably, each seed has a unique region label. For each seed, the associated region expands, or grows, according to the similarity in the corresponding regions of the cell matrix 400. In other words, the region growing is performed on the cell matrix 400 (the flow information) but the seeds are set using the results from the motion likelihood matrix 500 (the motion likelihood).

For each region label, adjacent cells to every cell with the region label in the cell matrix are identified and marked with the region label if the difference with the adjacent cells satisfies growing criteria. The process repeats until the number of cells with the region label does not increase or until a maximum number of iterations has been reached. The region growing algorithm is based on a flood filing principle over 4 connected neighbours (the adjacent cells in the upward, leftward, downward, and rightward direction in the cell matrix) but uses bespoke criteria and multiple threshold to avoid instabilities and improve performance in the considered context. During region growing, if two regions become adjacent to each other they merge into one region.

The growing criteria is that a considered cell has no other region label assigned; has a valid value i. e. the flow information exists and is not zero; has a value bigger than a growing threshold; and has a value that satisfies similarity criteria with other cells. The use of a growing threshold avoid instability due to comparison of small numbers.

The use of similarity criteria helps ensure that the region (all cells labelled with a region number) expands only to include the cells that belong to the candidate object e.g. the moving object. The similarity criteria comprise both local level and global level similarity criteria. In other embodiments, only one of the local level and global level similarity criteria may be used.

The global level similarity criteria requires that the difference between the cell value of a considered cell and the mean value of all cells presently labelled in the same region label is below a region-similarity threshold. As with all region growing thresholds, the region-similarity threshold is configurable. The region-similarity threshold may also be adaptive and may depend on the specific parameters in the acquired images e.g. noise.

The local level similarity criteria relate to comparisons with adjacent cells in the upward, leftward, downward, and rightward direction i.e. the 4 connected neighbouring cells. The specific criteria are different in different directions. A first local criterion is that, in the upward direction, the difference must be below a first local threshold. A second local criterion is that, in the left-right direction, the difference must be below the first local threshold and below the difference in the opposite direction by a second local threshold. A third local criterion is that, in the downward direction, the difference must be positive and below the first local threshold.

The second and third local criterion avoids the growing region expanding into cells that correspond with a road surface in the acquired images. The second local criterion promotes the growth on the most homogeneous direction according to the flow information. The third local criterion works on the assumption that the flow right below an object is smaller in magnitude that the flow of the moving object.

For improved speed/efficiency, the comparison of the flow information during region growing is performed only on the horizontal flow information. This assumes that object motion will be mostly be in a plane which is parallel to the direction of change in camera pose. For many applications, such as a front-facing camera on a vehicle on a road this is a reasonable assumption, given it is likely other objects will be moving on the same road as the vehicle.

The local level similarity criteria are particularly relevant for the case of an object with a direction of motion towards a forward moving camera. This is because in this case the direction of the flow information at the moving object is the same as other static parts of the surrounding environment (as the other parts are also approaching the camera as it moves forward), only the magnitude of flow information is different.

In situations where the direction of the object is the opposite, e.g. for an object that is moving away from the moving camera, the relative difference with the mean flow of the region will likely already be enough to block the growth of the region.

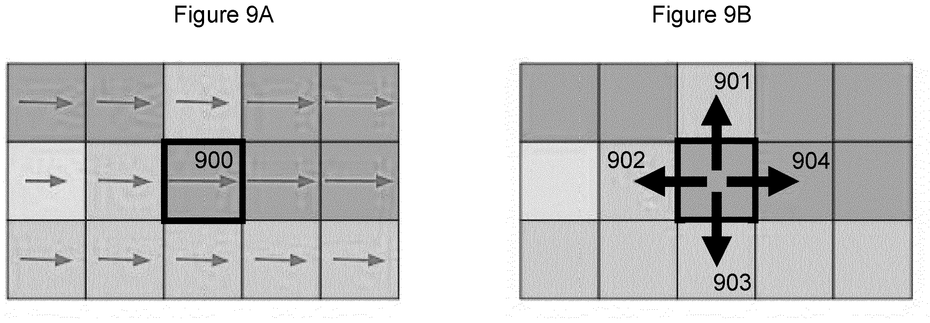

Figures 9A and 9B provide an examples of cell assessment that may occur during the region growing process. In Figure 9A, the magnitude of the horizontal flow information is indicated both by the darkness of the cell and the length of the arrow in the cell. The seed cell 900 is marked by a black rectangle in both figures (9A and 9B).

Figure 9B demonstrates whether the region growing criteria are met in the four directions of the 4-connected cells (upwards - toward the upper cell 901, leftward - toward the leftward cell 902, downward - toward the lower cell 903, and rightward - toward the rightward cell 904). In figure 9B, white arrows indicate the growing criteria in the direction of the arrow are satisfied and black arrows indicate the growing criteria in the direction of the arrow are not satisfied.

Growth in the upward region, growing the region of the seed into upper cell 901, is allowed as the flow information are in the same direction and above the growing threshold. Growth in the downward region is blocked because, even through the lower cell 903 has flow information directed similarly to the seed cell 900 and is above the growing threshold, the difference between the seed cell 900 and the lower cell 903 is negative. In the left-right direction, the leftward and rightward cell have both flow information directed similarly to the seed cell 900 and above the growing threshold, however the difference between the seed cell 900 and the leftward cell 904 is bigger than the difference between the seed cell 900 and the rightward cell 902 so the growth is only permitted in the rightward direction.

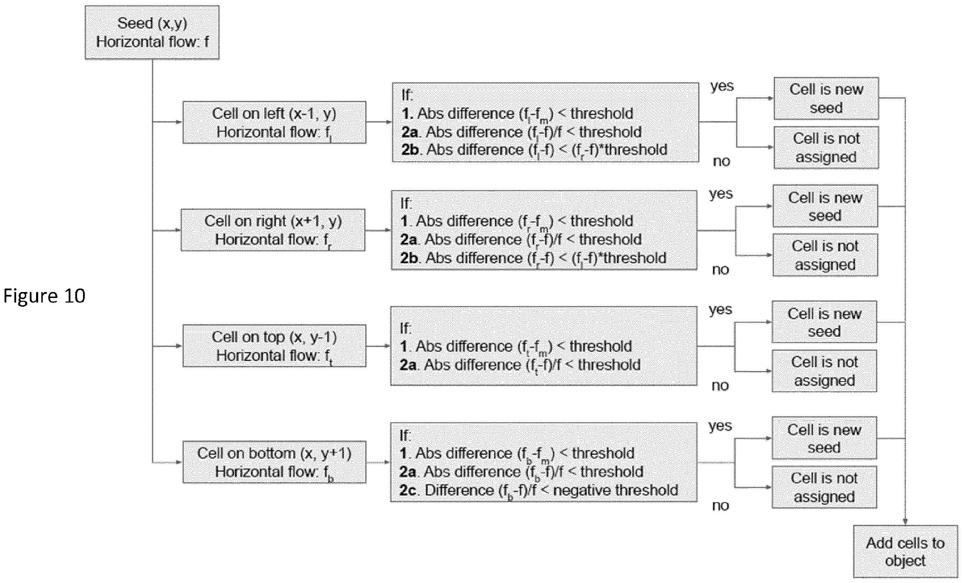

The growing process is further detailed in figure 10, which provides a flow chart of the region growing process and lists the criteria assessed on the horizontal flow in the cell matrix.

The region growing process improves the accuracy of the region labelling. In other words, the final region indicating the moving objection is more accurately aligned to the moving object in the acquired images from the camera.

After processing the filtered motion likelihood image 700 by region growing the result is a single moving region 801, as shown by the bounding polygon overlaid the camera image of figure 8. This region 801 is in good alignment with the moving car seen in the underlying camera image on the right-hand side.

It is therefore more likely that by following the above-described process, more regions corresponding to moving objects will be identified. The resultant information can then be reported to the driver and/or a vehicular module. As described above, the method may be used in a vehicular module such as a vehicle control mechanism. In this case, the vehicle control mechanism will take the information into account when controlling the vehicle.

The information may also be reported or recorded. Reporting or recording may be in the form of an audio alert, a record in a storage device e.g. a hard disk, or a display on a screen that is visible to the driver. As shown in figure 8, a useful way of reporting the information is to display an image from a camera with the identified moving objects encased in polygons.

## Claims

1. A computer- implemented
   method for identifying moving objects in an imaged environment comprising:

   acquiring a first camera image, from a camera (2) mounted on a vehicle (1), at a first time at a first pose (C1);
   acquiring a second camera image, from the camera (2), at a second pose (C2) at a second time, the second time being after the first time;
   acquiring a third camera image, from the camera (2), at a third pose at a third time, the third time being after the second time;
   forming (100) a first optical flow map from the first camera image and the second camera image;
   forming a second optical flow map from the second camera image and the third camera image;
   forming a motion likelihood image for said third camera image in which a value for each motion likelihood image location is formed by:

   selecting a plurality of flow information values from a region of the second flow map corresponding to said location;
   aggregating the plurality of flow information values and, using a pose change between said second and third poses, forming a motion likelihood value for said location;
   weighting (130) the motion likelihood value according to the variance of the plurality of flow information values in said region and selecting a minimum (140) of the motion likelihood value and a corresponding motion likelihood value previously formed from the first optical flow map; and

   identifying (150) regions of the motion likelihood image as corresponding to moving objects wherein weighting the motion likelihood value according to the variance of the plurality of flow information values in said region, comprises:

   calculating a covariance matrix for horizontal and vertical flow values in the plurality of flow information values;
   summing the eigenvalues of the covariance matrix into a summed value, $\lambda$; and
   multiplying the motion likelihood value by $1/(1 + \omega\lambda^2)$, where $\omega$ is an adjustable parameter.

2. The method of claim 1, wherein the pose change is determined from data from a vehicle mounted odometry sensor.

3. The method of claim 1 or 2, wherein selecting a minimum of the motion likelihood value and a corresponding motion likelihood value comprises:
   selecting a minimum of the weighted motion likelihood value and a corresponding weighted motion likelihood value.

4. The method of any preceding claim, wherein selecting a minimum of the motion likelihood value and a corresponding motion likelihood value comprises:
   if only one of the motion likelihood values is valid, selecting the valid motion likelihood value.

5. The method of any preceding claim, wherein the camera comprises a fisheye lens.

6. The method of any preceding claim, wherein identifying regions of the motion likelihood image as corresponding to moving objects comprises:

   labelling values (150) in the motion likelihood image above a threshold as corresponding to moving objects; and
   reporting (160) the labelled values.

7. The method of claim 6, wherein horizontal flow values in the second optical flow map are aggregated into a two-dimensional array, and

wherein labelling values (150) in the motion likelihood image above a threshold as corresponding to moving objects comprises:

identifying positions in the motion likelihood image with a value above a threshold as a seed location;
for each position in the array at a seed location, labelling the array position with a region number; and
growing the regions by, repeatedly:

identifying array positions that are adjacent to an array position with the region label; and
labelling each array position of the identified array positions with the region label if the horizontal flow value at the array position satisfies certain conditions.

8. The method of claim 7, wherein growing the regions repeats until a maximum number of iterations is reached or until the number of array positions labelled with the region label does not increase in an iteration.

9. The method of claim 7 or 8, wherein the certain conditions are that the considered array position:

has no other region label assigned;
has a valid horizontal flow value;
has a horizontal flow value greater than a growing threshold; and
has a horizontal flow value that satisfies similarity criteria with horizontal flow values at other array positions.

10. The method of claim 9, wherein the similarity criteria comprise the criterion of the difference, in horizontal flow, being within a region-similarity threshold with the mean value of all horizontal flow values at array positions labelled with the same region label as the considered array position.

11. The method of claim 9 or 10, wherein the similarity criteria comprise the criteria of the differences, in horizontal flow values, between a considered array position and adjacent array position being:

in the upward direction, below a first local threshold;
in the left-right direction, below the first local threshold and below the difference in the opposite direction by a second local threshold; and
in the downward direction, positive and below the first local threshold.

12. A vehicle comprising a camera module, the camera module operating according to any preceding method.

13. The vehicle of claim 12, further comprising a vehicle control mechanism configured to receive a report of the identified regions of the motion likelihood image corresponding to moving objects and to take this information into account when controlling the vehicle.

**Patentansprüche**

1. Computerimplementiertes Verfahren zum Identifizieren sich bewegender Objekte in einer abgebildeten Umgebung, umfassend:

Erfassen eines ersten Kamerabilds von einer an einem Fahrzeug (1) montierten Kamera (2) zu einem ersten Zeitpunkt mit einer ersten Pose (C1);
Erfassen eines zweiten Kamerabilds von der Kamera (2) bei einer zweiten Pose (C2) zu einem zweiten Zeitpunkt, wobei der zweite Zeitpunkt nach dem ersten Zeitpunkt liegt;
Erfassen eines dritten Kamerabilds von der Kamera (2) bei einer dritten Pose zu einem dritten Zeitpunkt, wobei der dritte Zeitpunkt nach dem zweiten Zeitpunkt liegt;
Bilden (100) einer ersten optischen Flusskarte aus dem ersten Kamerabild und dem zweiten Kamerabild;
Bilden einer zweiten optischen Flusskarte aus dem zweiten Kamerabild und dem dritten Kamerabild;
Bilden eines Bewegungswahrscheinlichkeitsbilds für das dritte Kamerabild, wobei ein Wert für jeden Bewegungswahrscheinlichkeitsbildort gebildet wird durch:

Wählen von mehreren Flussinformationswerten aus einem Gebiet der zweiten Flusskarte entsprechend dem Ort;
Ansammeln der mehreren Flussinformationswerte und, unter Verwendung einer Posenänderung zwischen der zweiten und der dritten Pose, Bilden eines Bewegungswahrscheinlichkeitswerts für den Ort;
Gewichten (130) des Bewegungswahrscheinlichkeitswerts gemäß der Varianz der mehreren Flussinformationswerte in dem Gebiet und
Wählen eines Minimums (140) des Bewegungswahrscheinlichkeitswerts und eines zuvor aus der ersten optischen Flusskarte gebildeten entsprechenden Bewegungswahrscheinlichkeitswerts; und
Identifizieren (150) von Gebieten des Bewegungswahrscheinlichkeitsbilds als sich bewegenden Objekten entsprechend, wobei das Gewichten des Bewegungswahrscheinlichkeitswerts gemäß der Varianz der mehreren Flussinformationswerte in dem Gebiet umfasst:

Berechnen einer Kovarianzmatrix für horizontale und vertikale Flusswerte in den mehreren Flussinformationswerten;
Summieren der Eigenwerte der Kovarianzmatrix zu einem summierten Wert, A; und
Multiplizieren des Bewegungswahrscheinlichkeitswerts mit $1/(1+ \omega\lambda^2)$, wobei $\omega$ ein verstellbarer Parameter ist.

2. Verfahren nach Anspruch 1, wobei die Posenänderung anhand von Daten von einem fahrzeugmontierten Odometriesensor bestimmt wird.

3. Verfahren nach Anspruch 1 oder 2, wobei das Wählen eines Minimums des Bewegungswahrscheinlichkeitswerts und eines entsprechenden Bewegungswahrscheinlichkeitswerts umfasst:
Wählen eines Minimums des gewichteten Bewegungswahrscheinlichkeitswerts und eines entsprechenden gewichteten Bewegungswahrscheinlichkeitswerts.

4. Verfahren nach einem vorhergehenden Anspruch, wobei das Wählen eines Minimums des Bewegungswahrscheinlichkeitswerts und eines entsprechenden Bewegungswahrscheinlichkeitswerts umfasst: falls nur einer der Bewegungswahrscheinlichkeitswerte gültig ist, Wählen des gültigen Bewegungswahrscheinlichkeitswerts.

5. Verfahren nach einem vorhergehenden Anspruch, wobei die Kamera ein Fischaugenobjektiv umfasst.

6. Verfahren nach einem vorhergehenden Anspruch, wobei das Identifizieren von Gebieten des Bewegungswahrscheinlichkeitsbilds als sich bewegenden Objekten entsprechend umfasst:

Markieren von Werten (150) in dem Bewegungswahrscheinlichkeitsbild über einem Schwellwert als sich bewegenden Objekten entsprechend; und
Melden (160) der markierten Werte.

7. Verfahren nach Anspruch 6, wobei horizontale Flusswerte in der zweiten optischen Flusskarte in ein zweidimensionales Array gesammelt werden, und
wobei das Markieren von Werten (150) in dem Bewegungswahrscheinlichkeitsbild über einem Schwellwert als sich bewegenden Objekten entsprechend umfasst:

Identifizieren von Positionen in dem Bewegungswahrscheinlichkeitsbild mit einem Wert über einem Schwellwert als einen Saatort;
für jede Position in dem Array an einem Saatort, Markieren der Arrayposition mit einer Gebietsnummer; und
Vergrößern der Gebiete durch wiederholtes:

Identifizieren von Arraypositionen, die benachbart zu einer Arrayposition mit dem Gebietslabel sind; und
Markieren jeder Arrayposition der identifizierten Arraypositionen mit dem Gebietslabel, falls der horizontale Flusswert an der Arrayposition gewisse Bedingungen erfüllt.

8. Verfahren nach Anspruch 7, wobei sich das Vergrößern der Gebiete wiederholt, bis eine maximale Anzahl von Iterationen erreicht ist oder bis sich die Anzahl der mit dem Gebietslabel markierten Arraypositionen in einer Iteration nicht vergrößert.

9. Verfahren nach Anspruch 7 oder 8, wobei die gewissen Bedingungen lauten, dass die betrachtete Arrayposition:

kein anderes zugewiesenes Gebietslabel aufweist;
einen gültigen horizontalen Flusswert aufweist;
einen horizontalen Flusswert größer als ein Vergrößerungsschwellwert aufweist; und
einen horizontalen Flusswert aufweist, der Ähnlichkeitskriterien mit horizontalen Flusswerten an anderen Arraypositionen erfüllt.

10. Verfahren nach Anspruch 9, wobei die Ähnlichkeitskriterien das Kriterium der Differenz, im horizontalen Fluss, innerhalb eines Gebietsähnlichkeitsschwellwerts mit dem Mittelwert aller horizontalen Flusswerte an mit dem gleichen Gebietslabel markierten Arraypositionen an der betrachteten Arrayposition umfassen.

11. Verfahren nach Anspruch 9 oder 10, wobei die Ähnlichkeitskriterien die Kriterien der Differenzen, in horizontalen Flusswerten, zwischen einer betrachteten Arrayposition und einer benachbarten Arrayposition umfassen als:

in der Aufwärtsrichtung unter einem ersten lokalen Schwellwert;
in der Richtung links-rechts unter dem ersten lokalen Schwellwert und unter der Differenz in der entgegengesetzten Richtung in einem zweiten lokalen Schwellwert; und

in der Abwärtsrichtung positiv und unter dem ersten lokalen Schwellwert.

**12.** Fahrzeug umfassend ein Kameramodul, wobei das Kameramodul gemäß einem vorhergehenden Verfahren arbeitet.

**13.** Fahrzeug nach Anspruch 12, weiterhin umfassend einen Fahrzeugsteuermechanismus, der ausgebildet ist zum Empfangen einer Meldung der identifizierten Gebiete des Bewegungswahrscheinlichkeitsbilds entsprechend sich bewegender Objekte und zum Berücksichtigen dieser Informationen beim Steuern des Fahrzeugs.

**Revendications**

**1.** Procédé mis en œuvre par ordinateur pour identifier des objets en mouvement dans un environnement dont l'image est formée, comprenant :

l'acquisition d'une première image de caméra, à partir d'une caméra (2) montée sur un véhicule (1), à un premier instant dans une première pose (C1) ;
l'acquisition d'une deuxième image de caméra, à partir de la caméra (2), dans une deuxième pose (C2) à un deuxième instant, le deuxième instant étant postérieur au premier instant ;
l'acquisition d'une troisième image de caméra, à partir de la caméra (2), dans une troisième pose à un troisième instant, le troisième instant étant postérieur au deuxième instant ;
la formation (100) d'une première carte de flux optique à partir de la première image de caméra et de la deuxième image de caméra ;
la formation d'une deuxième carte de flux optique à partir de la deuxième image de caméra et de la troisième image de caméra ;
la formation d'une image de vraisemblance de mouvement pour ladite troisième image de caméra dans laquelle une valeur pour chaque emplacement d'image de vraisemblance de mouvement est formée, par :

la sélection d'une pluralité de valeurs d'informations de flux dans une région de la deuxième carte de flux correspondant audit emplacement ;
l'agrégation de la pluralité de valeurs d'informations de flux et, en utilisant un changement de pose entre lesdites deuxième et troisième poses, la formation d'une valeur de vraisemblance de mouvement pour ledit emplacement ;
la pondération (130) de la valeur de vraisemblance de mouvement en fonction de la variance de la pluralité de valeurs d'informations de flux dans ladite région, et
la sélection d'un minimum (140) de la valeur de vraisemblance de mouvement et d'une valeur de vraisemblance de mouvement correspondante précédemment formée dans la première carte de flux optique ; et
l'identification (150) de régions de l'image de vraisemblance de mouvement comme correspondant à des objets en mouvement,
dans lequel la pondération de la valeur de vraisemblance de mouvement en fonction de la variance de la pluralité de valeurs d'informations de flux dans ladite région comprend :

le calcul d'une matrice de covariance pour des valeurs de flux horizontal et vertical dans la pluralité de valeurs d'informations de flux ;
la sommation des valeurs propres de la matrice de covariance en une valeur sommée, $\lambda$, et
la multiplication de la valeur de vraisemblance de mouvement par $1/(1 + \omega\lambda^2)$, où $\omega$ est un paramètre réglable.

**2.** Procédé selon la revendication 1, dans lequel le changement de pose est déterminé à partir de données provenant d'un capteur odométrique monté sur le véhicule.

**3.** Procédé selon la revendication 1 ou 2, dans lequel la sélection d'un minimum de la valeur de vraisemblance de mouvement et d'une valeur de vraisemblance de mouvement correspondante comprend :
la sélection d'un minimum de la valeur de vraisemblance de mouvement pondérée et d'une valeur de vraisemblance de mouvement pondérée correspondante.

**4.** Procédé selon l'une quelconque des revendications précédentes, dans lequel la sélection d'un minimum de la valeur de vraisemblance de mouvement et d'une valeur de vraisemblance de mouvement correspondante comprend :
si une seule des valeurs de vraisemblance de mouvement est valide, la sélection de la valeur de vraisemblance de mouvement valide.

**5.** Procédé selon l'une quelconque des revendications précédentes, dans lequel la caméra comprend un objectif fisheye.

**6.** Procédé selon l'une quelconque des revendications précédentes, dans lequel l'identification de régions de l'image de vraisemblance de mouvement comme correspondant à des objets en mouvement comprend :

l'étiquetage de valeurs (150) dans l'image de vraisemblance de mouvement qui sont supérieures à un seuil comme correspondant à des objets en mouvement ; et
le signalement (160) des valeurs étiquetées.

**7.** Procédé selon la revendication 6, dans lequel les valeurs de flux horizontal contenues dans la deuxième carte de flux optique sont agrégées en un tableau bidimensionnel, et
dans lequel l'étiquetage de valeurs (150) dans l'image de vraisemblance de mouvement qui sont supérieures à un seuil comme correspondant à des objets en mouvement comprend :

l'identification de positions dans l'image de vraisemblance de mouvement qui présentent une valeur supérieure à un seuil en tant qu'emplacement de germe ;
pour chaque position dans le tableau qui est située à un emplacement de germe, l'étiquetage de la position de tableau par un numéro de région ; et
le fait de faire croître les régions en procédant, de manière répétée, à :

l'identification de positions de tableau qui sont adjacentes à une position de tableau présentant l'étiquette de région ; et
l'étiquetage de chaque position de tableau parmi les positions de tableau identifiées avec l'étiquette de région si la valeur de flux horizontal à la position de tableau satisfait à certaines conditions.

**8.** Procédé selon la revendication 7, dans lequel la croissance des régions se répète jusqu'à ce qu'un nombre maximum d'itérations soit atteint ou jusqu'à ce que le nombre de positions de tableau étiquetées avec l'étiquette de région n'augmente pas lors d'une itération.

**9.** Procédé selon la revendication 7 ou 8, dans lequel lesdites certaines conditions sont que la position de tableau considérée :

ne présente pas d'autre étiquette de région attribuée ;
présente une valeur de flux horizontal valide ;
présente une valeur de flux horizontal supérieure à un seuil de croissance ; et
présente une valeur de flux horizontal qui satisfait à des critères de ressemblance avec des valeurs de flux horizontal à d'autres positions de tableau.

**10.** Procédé selon la revendication 9, dans lequel les critères de ressemblance comprennent le critère selon lequel la différence, en flux horizontal, se situe en deçà d'un seuil de ressemblance de région avec la valeur moyenne de toutes les valeurs de flux horizontal à des positions de tableau qui sont étiquetées avec la même étiquette de région que la position de tableau considérée.

**11.** Procédé selon la revendication 9 ou 10, dans lequel les critères de ressemblance comprennent les critères selon lesquels les différences, en valeurs de flux horizontal, entre une position de tableau considérée et une position de tableau adjacente sont :

dans la direction ascendante, inférieures à un premier seuil local ;
dans la direction gauche-droite, inférieures au premier seuil local et inférieures à la différence, dans la direction opposée, d'un second seuil local ; et
dans la direction descendante, positives et inférieures au premier seuil local.

**12.** Véhicule comprenant un module de caméra, le module de caméra fonctionnant selon l'un quelconque des procédés précédents.

**13.** Véhicule selon la revendication 12, comprenant en outre un mécanisme de commande de véhicule configuré pour recevoir un signalement des régions identifiées de l'image de vraisemblance de mouvement qui correspondent à des objets en mouvement et pour prendre en compte ces informations lors de la commande du véhicule.

Figure 1

Figure 2

| | |
|---|---|
| 100 | Assess image differences (DOF) |

↓

| | |
|---|---|
| 110 | Form cell matrix (aggregate) |

↓

| | |
|---|---|
| 120 | Form Motion likelihood matrix |

↓

| | |
|---|---|
| 130 | Spatially filter |

↓

| | |
|---|---|
| 140 | Temporally filter |

↓

| | |
|---|---|
| 150 | Identify moving objects |

↓

| | |
|---|---|
| 160 | Report moving objects |

EP 3 855 393 B1

Figure 3

Figure 4

Figure 5

EP 3 855 393 B1

Figure 6

601
602
603

Figure 7

EP 3 855 393 B1

Figure 8

801

Figure 9B

Figure 9A

Figure 10

EP 3 855 393 B1

Seed (x,y)
Horizontal flow: f

Cell on left (x-1, y)
Horizontal flow: $f_l$

If:
**1.** Abs difference $(f_l - f_m)$ < threshold
**2a.** Abs difference $(f_l - f)/f$ < threshold
**2b.** Abs difference $(f_l - f)$ < $(f_r - f)$*threshold

yes → Cell is new seed
no → Cell is not assigned

Cell on right (x+1, y)
Horizontal flow: $f_r$

If:
**1.** Abs difference $(f_r - f_m)$ < threshold
**2a.** Abs difference $(f_r - f)/f$ < threshold
**2b.** Abs difference $(f_r - f)$ < $(f_l - f)$*threshold

yes → Cell is new seed
no → Cell is not assigned

Cell on top (x, y-1)
Horizontal flow: $f_t$

If:
**1.** Abs difference $(f_t - f_m)$ < threshold
**2a.** Abs difference $(f_t - f)/f$ < threshold

yes → Cell is new seed
no → Cell is not assigned

Cell on bottom (x, y+1)
Horizontal flow: $f_b$

If:
**1.** Abs difference $(f_b - f_m)$ < threshold
**2a.** Abs difference $(f_b - f)/f$ < threshold
**2c.** Difference $(f_b - f)/f$ < negative threshold

yes → Cell is new seed
no → Cell is not assigned

Add cells to object

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190164296 A

**Non-patent literature cited in the description**

- **L. MARIOTTI ; C. HUGHES.** Spherical formulation of moving object geometric constraints for monocular fisheye cameras. *IEEE Intelligent Transportation Systems Conference,* 2019
- **M. NARAYANA et al.** coherent motion segmentation in moving camera videos using optical flow orientations. *Proceedings of the IEEE International Conference on Computer Vision,* 2013, vol. 1577, 1577
- **A. M. PINTO et al.** Unsupervised flow-based motion analysis for an autonomous moving system. *Image and Vision Computing,* 2014, vol. 32 (6-7), 391
- **A. M. PINTO et al.** Visual motion perception for mobile robots through dense optical flow fields. *Robotics and Autonomous Systems,* 2017, vol. 87, 1

- **F. MARTINEZ et al.** A motion descriptor based on statistics of optical flow orientations for action classification in video-surveillance. *Multimedia and Signal Processing,* 2012, vol. 267
- Two-frame motion estimation based on polynomial expansion. **G. FARNEBACK'S.** Scandinavian conference on Image analysis. Springer, 2003, 363-370
- **L. MARIOTTI ; C. HUGHERS.** Spherical formulation of moving object geometric constraints for monocular fisheye cameras. *IEEE Intelligent Transportation Systems Conference,* 2019